# EUROPÄISCHE PATENTANMELDUNG

(11) **EP 2 275 733 A1**
(43) Veröffentlichungstag der Anmeldung: **19.01.2011**
(21) Anmeldenummer: 10012621.8
(22) Anmeldetag: 15.05.2007
(51) Int. Cl.: F21S 8/00, G02B 6/00

(54) **Fahrzeugbauteil aus Polycarbonat mit optischer Wirkung**

(30) Priorität: 15.05.2006 DE 102006022923
(62) Teilanmeldung aus: 07009678.9
(71) Anmelder: Webasto AG, 82131 Stockdorf (DE)
(72) Erfinder: Schwaighofer, Ralf, 83115 Neubeuern (DE); Lang, Andreas, 82194 Gröbenzell (DE); Boss, Markus, 93055 Regensburg (DE)
(74) Vertreter: Wiese Konnerth Fischer Patentanwälte Partnerschaft

(57) **Zusammenfassung**

Die Erfindung betrifft ein Bauteil eines Fahrzeugs, das aus Polycarbonat hergestellt ist und das durch Materialgestaltung des lichtleitenden Polycarbonats optische Veränderungen bereitstellt, wobei erfindungsgemäß vorgesehen ist, dass die optische Veränderung durch eine erste Komponente (11) des Bauteils (10) gebildet ist, die innenseitig Reflexionsprismen (15) aufweist, und dass zwischen den Bereichen (14) mit Reflexionsprismen (15) eine zweite Komponente (13), insbesondere aus Polycarbonat, an der Innenseite (12) des Bauteils (10) angeordnet oder angebracht ist, die zumindest weniger transparent ist wie die erste Komponente (11).

## Beschreibung

Die Erfindung betrifft ein Bauteil eines Fahrzeugs mit den Merkmalen des Oberbegriffs des Anspruchs 1.

Zur Erzielung einer optischen Wirkung ist aus der DE 103 43 778 A1 bekannt, eine flächige Lichtleiterplatte aus thermoplastischem Kunststoff wie insbesondere aus Polycarbonat (PC) als Lichtdach zur großflächigen Erhellung eines Fahrzeuginnenraumes zu verwenden.

Des weiteren sind optische Einparkhilfen bekannt, die an die Innenseite einer Heckscheibe geklebt werden und einen Streulinseneffekt aufweisen, so dass ein größerer Bereich hinter dem Fahrzeug vom Fahrer einzusehen ist.

Die DE 41 09 532 A1 zeigt ein gattungsgemäßes Fahrzeugbauteil, das ein aus Polycarbonat hergestelltes Basisteil aufweist, an dem innenseitig halbkugel- oder fischaugenartige Lichtreflexionsteile gebildet sind. Auf die Lichtreflexionsteile ist eine Lichtauffangschicht aufgebracht, in der eine Vielzahl von Durchtrittsöffnungen in Form von Löchern oder Schlitzen gebildet sind. Ein an der Innenseite des Basisteils angebrachtes Lichtemitterelement kann Licht durch die Durchtrittsöffnungen nach außen senden.

Aufgabe der Erfindung ist es, ein eingangs genanntes Bauteil zu schaffen, das hinsichtlich seiner optischen Wirkung verbessert ist.

Diese Aufgabe wird erfindungsgemäß durch ein Bauteil mit den Merkmalen des Anspruchs 1 gelöst. Demnach ist die optische Veränderung durch eine erste

Komponente des Bauteils gebildet, die innenseitig Reflexionsprismen aufweist, und zwischen den Bereichen mit Reflexionsprismen ist eine zweite Komponente, insbesondere aus Polycarbonat, an der Innenseite des Bauteils angeordnet oder angebracht, die zumindest weniger transparent ist wie die erste Komponente.

Durch die An- oder Umformung des Polycarbonatmaterials beim Spritzgießvorgang können Gestaltungen für unterschiedlichste optische Effekte in einfacher Weise und hoher Qualität an teiltransparenten oder volltransparenten Bauteilen hergestellt werden.

Vorteilhafte Ausgestaltungen der Erfindung sind in den abhängigen Ansprüchen angegeben.

In bevorzugter Gestaltung kann vorgesehen sein, dass das Bauteil zumindest einen Bereich aufweist, der durch Materialgestaltung des lichtleitenden Polycarbonats relativ zu einem angrenzenden Bauteilbereich optisch veränderbar ist.

In bevorzugter Gestaltung kann vorgesehen sein, dass ein bzw. der optisch veränderbare Bereich durch eine erste Komponente des Bauteils gebildet ist, die innenseitig Reflexionsprismen aufweist, und dass angrenzend an den Bereich mit Reflexionsprismen oder zwischen den Bereichen mit Reflexionsprismen eine zweite Komponente, insbesondere aus Polycarbonat, an der Innenseite des Bauteils angeordnet oder angebracht ist, die zumindest weniger transparent ist wie die erste Komponente.

In bevorzugter Gestaltung kann vorgesehen sein, dass an dem Bereich bzw. einer die Reflexionsprismen enthaltenden Reflexionsfläche von außen einstrahlendes Licht nach außen hin in der Art von Katzenaugen reflektiert und/oder nach innen hin verteilt wird und zur Beleuchtung oder der Erzeugung eines optischen Musters dient.

In bevorzugter Gestaltung kann vorgesehen sein, dass durch eine insbesondere an der zweiten Komponente innenseitig gelagerte Leuchteinrichtung die Reflexionsprismen innenseitig anstrahlbar sind, so dass über die Lichtleitung in der ersten Komponente an der Außenseite des Bauteils bzw. der ersten Komponente beleuchtete Reflexionsflächen sichtbar sind.

In bevorzugter Gestaltung kann vorgesehen sein, dass die Reflexionsprismen an dem Polycarbonat der ersten Komponente gebildet sind.

In bevorzugter Gestaltung kann vorgesehen sein, dass die Reflexionsprismen an der ersten Komponente als eigenständiges Bauteil aus lichtleitendem Polycarbonat gebildet sind und an der Innenseite der ersten Komponente flächig angebracht sind.

In bevorzugter Gestaltung kann vorgesehen sein, dass das die Reflexionsprismen enthaltende Bauteil durch Clipsverbindungen an der ersten Komponente anbringbar ist, wobei insbesondere die Clipse an der zweiten Komponente gebildet sind und an zugeordneten Halterungen der ersten Komponente lösbar festlegbar sind.

In bevorzugter Gestaltung kann vorgesehen sein, eine optische Veränderung in den die Reflexionsprismen aufweisenden Bereichen durch Einfärbung des Polycarbonats oder durch Wahl der Lichtfarbe der Lichtquelle erzielbar sind.

Bevorzugt ist das Bauteil ein Dachteil eines Falt- oder Klappdaches eines Cabriolets oder ein Dachteil eines festen Fahrzeugdaches oder ein Bestandteil eines solchen Dachteils.

Nachfolgend werden Ausführungsbeispiele des Bauteils unter Bezugnahme auf die Zeichnung näher erläutert. Es zeigt:
- Fig. 1: in einer Schnittansicht ein erstes Ausführungsbeispiel eines Bauteils, bei dem Licht einer Leuchteinrichtung innenseitig eingestrahlt wird;
- Fig. 2: in einer außenseitigen Draufsicht das Bauteil mit der Darstellung des leuchtenden Bereiches an der Außenseite des Bauteils;
- Fig. 3: in einer Schnittansicht ein zweites Ausführungsbeispiel eines Bauteils;
- Fig. 4: in einer außenseitigen Draufsicht das Bauteil der Fig. 3 in einer Anord- nung an einem Seitenteil eines hinteren Dachelements eines Klappda- ches eines Cabriolets;
- Fig. 5: in einer perspektivischen Draufsicht ein drittes Ausführungsbeispiel eines Bauteils mit einer optischen Einrichtung zur Vergrößerung des Blickfeldes; und
- Fig. 6: in einer Schnittansicht gemäß Linie A - A in Fig. 5 das Bauteil mit der optischen Vergrößerungseinrichtung.

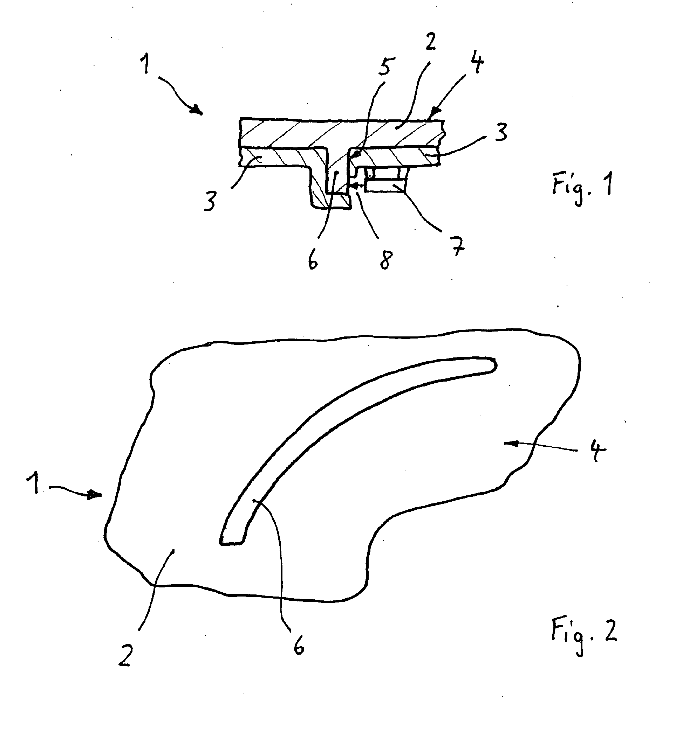

Ein Bauteil 1 eines Fahrzeugs (siehe Fig. 1 und 2) ist in einem Spritzgusswerkzeug aus zwei schichtartigen Komponenten 2 und 3 hergestellt. Die erste Komponente 2, die eine Außenseite 4 des Bauteils 1 bildet, ist aus insbesondere transparentem Polycarbonat hergestellt. Die zweite Komponente 3 ist in dem Spritzgusswerkzeug in einem an sich bekannten 2K-Spitzvorgang an die erste Komponente 2 angespritzt. Die erste Komponente 2 ist mit einer sich einwärts durch eine Aussparung 5 in der zweiten Komponente 3 erstreckenden Rippe 6 gebildet. Die Rippe 6 ist von der zweiten Komponente 3 weitgehend ummantelt, so dass lediglich ein schmaler Bereich der Rippe 6, z. B. ein Stirnbereich oder ein Seitenbereich (wie in Fig. 1 dargestellt), von der zweiten Komponente 3 unbedeckt ist. Zumindest eine Leuchteinrichtung oder Lichtquelle wie z. B. eine Leuchtdiode 7 ist derart an der zweiten Komponente 3 angeordnet, dass sie Licht (siehe Pfeil 8) an der unbedeckten Stelle in die Rippe 6 und damit in die erste Komponente 2 einstrahlen kann. Dieses Licht 7 wird über die Rippe 6 zur Außenfläche oder Außenseite 4 der ersten Komponente 2 bzw. des Bauteils 1 geleitet, die transparent oder nur leicht getönt und damit lichtleitend gebildet ist. Das Licht 7 ist an der Außenseite 4 der ersten Komponente 2 über einen der Rippe 6 entsprechenden länglichen Bereich zu sehen (siehe Fig. 2).

Die Leuchteinrichtung oder Leuchtdiode 7 kann an der zweiten Komponente 3 zur Innenseite optisch verdeckt angeordnet sein. Die Rippe 6 kann innenseitig auch derart von der zweiten Komponente 3 umspritzt sein, dass eine innenseitige Lichtaustrittsfläche verbleibt, so dass auch Licht nach innen gerichtet sein kann bzw. von innen an der Rippe 6 zu sehen ist.

Des weiteren kann auch Licht wie z. B. Umgebungslicht von der Außenseite 4 über die Rippe 6 zur Innenseite geleitet werden und somit einen optischen Lichteffekt erzeugen. Das Bauteil 1 kann ein Dachteil eines festen Daches oder eines Klappdaches eines Cabriolets sein und die Rippe 6 kann zur Innenraumbeleuchtung dienen oder zumindest optische Effekte innenseitig wie auch außenseitig seitlich am Dachteil oder an der Oberseite des Dachteils erzeugen.

Die Rippe 6 kann durchgehend oder mit Unterbrechungen gebildet sein. Die Rippe 6 kann in beliebigen schmalen oder breiten Formen gebildet sein. Demzufolge lassen sich Linien, Kreise, Flächen oder gekreuzte Bahnen sowie beliebige Leuchtpunkte oder Flächen mit einer oder mit mehreren Rippen herstellen.

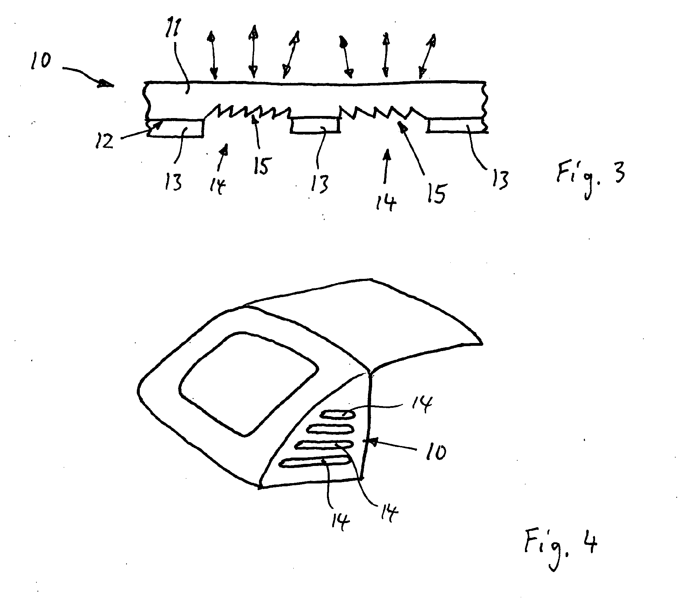

Ein Bauteil 10 (siehe Fig. 3 und 4) enthält gemäß einem zweiten Ausführungsbeispiel eine erste Komponente 11 aus transparentem bzw. lichtleitendem Polycarbonat und eine an die Innenseite 12 in einem 2K-Spritzgießverfahren angespritzte zweite Komponente 13, die bestimmte Bereiche der ersten Komponente 11 innenseitig abdeckt und bestimmte Bereiche 14 unbedeckt lässt, an denen die erste Komponente 11 Reflexionsprismen 15 an ihrer Innenseite 12 aufweist. Diese Bereiche bilden Reflexionsflächen (in Fig. 4 mit Bezugszeichen 14 bezeichnet), an denen von außen einstrahlendes Licht nach außen hin in der Art von Katzenaugen und/oder nach innen hin reflektiert und verteilt wird und zur Beleuchtung oder der Erzeugung eines optischen Musters dient.

Fig. 4 zeigt als Bauteil 10 ein hinteres Dachteil eines Klappdaches eines Cabriolets, an dessen Seitenwand die Reflexionsflächen 14 angeordnet sind.

Des weiteren kann durch eine insbesondere an der zweiten Komponente 13 innenseitig gelagerte Leuchteinrichtung (nicht dargestellt) die Reflexionsprismen 15 innenseitig angestrahlt werden, so dass über die Lichtleitung in der ersten Komponente 11 an der Außenseite des Bauteils 10 bzw. der ersten Komponente 11 beleuchtete Reflexionsflächen sichtbar sind.

Statt der Ausbildung der Reflexionsprismen 15 an der ersten Komponente 11 können die Reflexionsprismen 15 auch als eigenständiges Bauteil aus lichtleitendem Polycarbonat gebildet sein und an der Innenseite der ersten Komponente 11 flächig angebracht werden, z. B. durch Clipsverbindungen an der ersten Komponente 11, wobei die Clipse an der zweiten Komponente gebildet sein können und an zugeordneten Halterungen der ersten Komponente lösbar festgelegt werden. Das die Reflexionsprismen 15 aufweisende Bauteil kann auch als Zubehörteil zum nachträglichen Anbringen an der Innenseite einer Fahrzeugscheibe vorgesehen sein.

Durch Einfärbung des Polycarbonats oder durch Wahl der Lichtfarbe der Lichtquelle können farbliche Effekte erzielt werden.

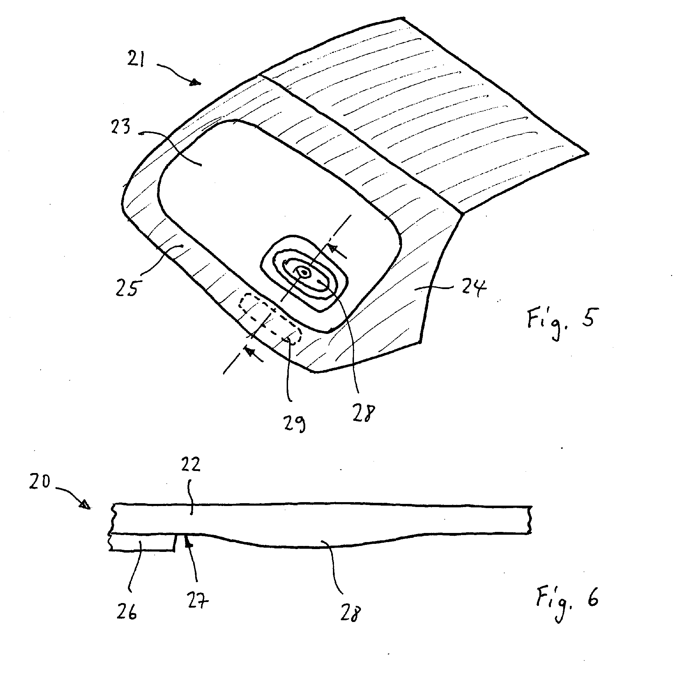

Ein Bauteil 20 (siehe Fig. 5 und 6), z. B. ein hinteres Dachelement 21 eines Klappdaches eines Cabriolets, ist gemäß einem dritten Ausführungsbeispiel von einer ersten Komponente 22 aus Polycarbonat gebildet, wobei neben der Heckscheibe 23 aus transparentem Polycarbonat durch bereichsweises Einfärben oder Folienabdecken andere Bereiche des Dachelements 21 wie Seitenflächen 24 oder rahmenartige Umrandungen 25 der Heckscheibe 23 nicht transparent gebildet sind. Die nicht transparente Abdeckung kann auch durch Anspritzen einer zweiten Komponente 26 in dem verwendeten 2K-Spritzgießverfahren an die Innenseite 27 der ersten Komponente 22 erfolgen.

Durch eine Materialgestaltung oder Materialverdickung der ersten Komponente 22 kann eine Optik 28 oder Linseneinrichtung an der Heckscheibe 23 ausgeformt werden, die den Bereich hinter dem Fahrzeug vergrößert und als an sich bekannte optische Einparkhilfe dienen kann. Die Materialgestaltung oder Materialverdickung kann in der Art einer Streu- oder Fresnell-Linse gebildet sein. Diese Optik oder Linseneinrichtung oder eine weitere Optik 29 oder Linseneinrichtung (in Fig. 5 strichliert dargestellt) kann auch im Bereich der zweiten Komponente 26 gebildet sein, in der dann eine entsprechende Aussparung gebildet ist.

### Bezugszeichenliste

- 1: Bauteil
- 2: erste Komponente
- 3: zweite Komponente
- 4: Außenseite
- 5: Aussparung
- 6: Rippe
- 7: Leuchtdiode
- 8: Licht

- 10: Bauteil
- 11: erste Komponente
- 12: Innenseite
- 13: zweite Komponente

- 14: Bereich
- 15: Reflexionsprismen

- 20: Bauteil
- 21: hinteres Dachelement
- 22: erste Komponente
- 23: Heckscheibe
- 24: Seitenfläche
- 25: Umrandung
- 26: zweite Komponente
- 27: Innenseite
- 28: Optik
- 29: Optik

## Patentansprüche

1. Bauteil eines Fahrzeugs, das aus Polycarbonat hergestellt ist und das durch Materialgestaltung des lichtleitenden Polycarbonats optische Veränderungen bereitstellt,
**dadurch gekennzeichnet,**
**dass** die optische Veränderung durch eine erste Komponente (11) des Bauteils (10) gebildet ist, die innenseitig Reflexionsprismen (15) aufweist, und
**dass** zwischen den Bereichen (14) mit Reflexionsprismen (15) eine zweite Komponente (13), insbesondere aus Polycarbonat, an der Innenseite (12) des Bauteils (10) angeordnet oder angebracht ist, die zumindest weniger transparent ist wie die erste Komponente (11).

2. Bauteil nach Anspruch 1,
**dadurch gekennzeichnet, dass** das Bauteil zumindest einen Bereich aufweist, der durch Materialgestaltung des lichtleitenden Polycarbonats relativ zu einem angrenzenden Bauteilbereich optisch veränderbar ist.

3. Bauteil nach Anspruch 1 oder 2,
**dadurch gekennzeichnet, dass** ein bzw. der optisch veränderbare Bereich durch eine erste Komponente (11) des Bauteils (10) gebildet ist, die innenseitig Reflexionsprismen (15) aufweist, und
dass angrenzend an den Bereich mit Reflexionsprismen (15) oder zwischen den Bereichen (14) mit Reflexionsprismen (15) eine zweite Komponente (13), insbesondere aus Polycarbonat, an der Innenseite (12) des Bauteils (10) angeordnet oder angebracht ist, die zumindest weniger transparent ist wie die erste Komponente (11).

4. Bauteil nach einem der Ansprüche 1 bis 3,
**dadurch gekennzeichnet, dass** an dem Bereich bzw. einer die Reflexionsprismen enthaltenden Reflexionsfläche von außen einstrahlendes Licht nach außen hin in der Art von Katzenaugen reflektiert und/oder nach innen hin verteilt wird und zur Beleuchtung oder der Erzeugung eines optischen Musters dient.

5. Bauteil nach einem der Ansprüche 1 bis 4,
**dadurch gekennzeichnet, dass** durch eine insbesondere an der zweiten Komponente (13) innenseitig gelagerte Leuchteinrichtung die Reflexionsprismen (15) innenseitig anstrahlbar sind, so dass über die Lichtleitung in der ersten Komponente (11) an der Außenseite des Bauteils (10) bzw. der ersten Komponente (11) beleuchtete Reflexionsflächen sichtbar sind.

6. Bauteil nach einem der Ansprüche 1 bis 5,
**dadurch gekennzeichnet, dass** die Reflexionsprismen (15) an dem Polycarbonat der ersten Komponente (11) gebildet sind.

7. Bauteil nach einem der Ansprüche 1 bis 5,
**dadurch gekennzeichnet, dass** die Reflexionsprismen (15) an der ersten Komponente (11) als eigenständiges Bauteil aus lichtleitendem Polycarbonat gebildet sind und an der Innenseite der ersten Komponente (11) flächig angebracht sind.

8. Bauteil nach Anspruch 7,
**dadurch gekennzeichnet, dass** das die Reflexionsprismen (15) enthaltende Bauteil durch Clipsverbindungen an der ersten Komponente (11) anbringbar ist, wobei insbesondere die Clipse an der zweiten Komponente (13) gebildet sind und an zugeordneten Halterungen der ersten Komponente (11) lösbar festlegbar sind.

9. Bauteil nach einem der Ansprüche 1 bis 8,
**dadurch gekennzeichnet, dass** eine optische Veränderung in den die Reflexionsprismen (15) aufweisenden Bereichen durch Einfärbung des Polycarbonats oder durch Wahl der Lichtfarbe der Lichtquelle erzielbar sind.

10. Bauteil nach einem der Ansprüche 1 bis 9,
**dadurch gekennzeichnet, dass** das Bauteil ein Dachteil eines Falt- oder Klappdaches eines Cabriolets oder ein Dachteil eines festen Fahrzeugdaches ist oder ein Bestandteil eines solchen Dachteils ist.
